(19) Europäisches Patentamt
European Patent Office
Office européen des brevets

(11) **EP 1 921 550 A1**

(12) **DEMANDE DE BREVET EUROPEEN**

(43) Date de publication:
**14.05.2008 Bulletin 2008/20**

(51) Int Cl.:
***G06F 17/30*** *(2006.01)*

(21) Numéro de dépôt: **07290334.7**

(22) Date de dépôt: **20.03.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **13.11.2006 US 598229**

(71) Demandeur: **Innovatron (Société Anonyme) 75006 Paris (FR)**

(72) Inventeur: **Moreno, Roland 75006 Paris (FR)**

(74) Mandataire: **Dupuis-Latour, Dominique et al SEP Bardehle Pagenberg Dost Altenburg Geissler 14 boulevard Malesherbes 75008 Paris (FR)**

(54) **Procédé d'analyse et de traitement des requêtes appliquées à un moteur de recherche**

(57) Ce procédé est mis en oeuvre par un système informatique comprenant : un site (40) interfacé à un moteur de recherche ; des moyens (10, 20) pour produire des mots de vocabulaire ; des moyens (42) pour soumettre au moteur de recherche des requêtes contenant chacune un mot ou un groupe de mots ; et des moyens pour recevoir en réponse un résultat représentatif des occurrences du mot, ou de l'association de mots, dans un ensemble de pages web indexées par le moteur de recherche. Le procédé comprend : (a) la détermination d'un mot de départ et la soumission d'une requête contenant ce mot ; (b) la réception d'un résultat initial correspondant à ce mot de départ ; (c) la génération d'un mot additionnel et la soumission d'une requête incluant le mot de départ et le mot additionnel ; (d) la réception du résultat, inférieur au résultat initial, correspondant à la requête formulée à l'étape c) ; (e) la réitération N-1 fois des étapes c) et d) avec à chaque fois un mot additionnel différent, donnant ainsi N résultats respectifs ; et (f) le classement de ces N résultats. Après l'étape f), on prévoit en outre une étape (g) d'attribution, selon une règle fonction des N résultats, d'un indice d'apparentement à la fois global, attribué à la famille des N mots additionnels générés, et relatif, attribué en considération du mot de départ. Cet indice peut notamment être comparé à un seuil, de préférence un seuil variable, paramétrable par l'utilisateur, dont le franchissement provoque, ou non, la production d'un indicateur booléen.

FIG_1

EP 1 921 550 A1

**Description**

L'invention concerne un procédé d'analyse et de traitement de requêtes appliquées à un moteur de recherche.

Plus précisément, elle vise à améliorer les performances de ces moteurs de recherche de manière à assurer de façon plus efficace et économe (en termes de ressources informatiques) l'extraction des informations recherchées.

Le développement récent des applications liées à l'utilisation d'Internet a rendu populaire l'usage des moteurs de recherche tels que *Google* (marque déposée de Google Inc.) ou *Exalead* (marque déposée d'Exalead SA) pour la recherche d'informations, grâce à la capacité de ces moteurs de recherche d'indexer le contenu de plusieurs milliards de pages accessibles à la consultation sur toutes sortes de sites Internet.

Ces moteurs de recherche (ci-après "moteurs") sont mis en oeuvre en leur adressant une requête contenant un mot ou une "phrase", c'est-à-dire plusieurs mots (en l'absence d'opérateur particulier tels que AND, OR, etc. les mots sont censés être reliés par un ET logique).

Le moteur répond à cette requête en l'espace d'une fraction de seconde, fournissant une valeur numérique (intitulée "Résultats") représentative des occurrences ("hits") de pages contenant ce mot (ou les mots de la phrase) parmi l'ensemble des pages indexées par le moteur, ainsi qu'une liste des sites Internet pertinents correspondants.

Le nombre d'occurences (ci-après "résultat") proposé en retour par le moteur dépend grandement du choix des mots qui constituent la demande. Pour certains mots, il peut atteindre des dizaines, voire des centaines de milliers ou millions, tandis que pour d'autres il se réduit à un très petit nombre (quelques dizaines, voir unités). Si l'utilisateur soumet des termes très généraux, le résultat sera extrêmement élevé ; si, à l'inverse, il utilise une désignation très précise, le résultat sera beaucoup plus réduit.

Les premières générations de moteurs de recherche opéraient en analysant les pages indexées sur un critère de concordance exacte, littérale, du mot fourni avec la requête.

Ceci conduisait les utilisateurs à souvent procéder par tâtonnements, en multipliant les requêtes, modifiant les termes soumis au moteur de recherche, en ajoutant ou retranchant certains termes, etc. et ceci de façon totalement empirique et sans aucune certitude que les modifications apportées puissent contribuer à faire réellement converger le moteur vers l'objet de la recherche. De plus, l'expérience montre que les utilisateurs évaluent mal le pouvoir discriminant des mots à l'égard des moteurs de recherche informatiques dans le processus de recherche propre à celui-ci, conduisant à des résultats erratiques, mal maîtrisés.

Outre le risque d'omettre des réponses pertinentes, il en résulte du point de vue technique une multiplication inutile du nombre de requêtes, avec une augmentation corrélative du trafic sur le réseau et, au niveau du moteur, un accroissement important des ressources nécessaires pour traiter de façon satisfaisante et dans des délais raisonnables le flux des requêtes.

Or la diffusion de plus en plus large d'internet et de l'utilisation des moteurs de recherche par le grand public, ainsi que la concentration des requêtes sur un nombre de plus en plus réduit de moteurs considérés comme les plus performants, laissent présager une augmentation considérable des ressources informatiques qui seront nécessaires à ces moteurs de recherche dans les années à venir.

Ces ressources informatiques concernent tant la puissance de calcul nécessaire au traitement de la requête proprement dite, que la gestion des files d'attente, dont la complexité et les besoins en capacité de stockage augmentent en fonction du trafic incident.

Les développements actuels s'orientent vers une recherche fondée non plus sur l'identité exacte d'un mot, ni même sur des variantes de celui-ci (singulier/pluriel, forme déclinée, variante d'écriture, etc.), mais sur des mots apparentés, c'est-à-dire appartenant au même champ sémantique que le mot initial, de manière à augmenter le potentiel de recherche et permettre une convergence plus rapide vers l'objet de la requête.

Un tel algorithme est proposé sous le nom de *Google Sets* (marque déposée de Google Inc.), qui est un logiciel prédictif permettant de générer des mots (noms communs ou noms propres), par exemple une liste de quinze mots, à partir de seulement deux ou trois mots donnés par un utilisateur, la liste fournie étant censée appartenir au même champ sémantique que les mots donnés par l'utilisateur. Par exemple, l'utilisateur tape le nom de deux ou trois états américains, et le générateur produit une liste d'états de ce pays. Il peut de la même façon générer des noms de présidents des États-Unis, de société, etc. à partir de deux ou trois exemples qui lui sont donnés. Le logiciel sait ainsi parfaitement discriminer {Johnson Pfizer} qui donnera une liste de firmes pharmaceutiques, d'avec {Johnson Washington} qui donnera des noms de présidents des États-Unis.

Le WO-A-2004/031916 (Google Inc.) décrit un algorithme de ce type, pour la sélection de *clusters* de mots en relation conceptuelle avec un ou plusieurs mots constituant les paramètres d'entrée de l'algorithme. Les *clusters* sont choisis à partir d'un modèle probabiliste complexe, de manière à caractériser, du point de vue sémantique, le document dont sont extraits les mots initiaux.

Mais cet algorithme est essentiellement un générateur de mots ou de *clusters* de mots apparentés ; il ne vise par à évaluer la simple proximité sémantique, par rapport à un mot initial, d'un mot donné provenant d'une source extérieure.

Il existe donc le besoin d'un outil capable d'évaluer la pertinence sémantique d'un mot donné (ci-après "mot additionnel") ou d'une famille de mots considérés collectivement, par rapport à un autre mot donné (ci-après "mot de départ") représentatif du champ sémantique général objet de la recherche.

L'invention propose un tel outil, qui puisse être utilisé avec des mots (mots de départ et/ou mots additionnels) produits par un opérateur ou automatiquement par un générateur de mots, ou bien choisis et soumis par un utilisateur. Ces mots constitueront les paramètres d'entrée de l'algorithme mis en oeuvre par le procédé de l'invention - qui n'a pas pour but de produire des mots, mais d'en évaluer la pertinence relative du point de vue sémantique.

L'invention a également pour but de proposer un tel procédé qui permette d'améliorer de manière non empirique le processus de traitement des requêtes d'interrogation appliquées à un moteur de recherche, avec notamment pour résultats :

- la diminution du temps de traitement et, corrélativement, l'accélération de la réponse finale à l'utilisateur ;
- la réduction du nombre global des requêtes, permettant une optimisation de la gestion des files d'attente et des ressources de stockage associées ;
- une réduction globale du trafic, dont une meilleure fluidité de celui-ci.

De plus, outre ces améliorations matérielles et quantitatives directement attachées au fonctionnement du moteur de recherche et au réseau, l'utilisateur bénéficiera incidemment d'une amélioration de la qualité de la recherche, le procédé de l'invention étant en mesure de lui proposer une nouvelle heuristique de navigation remplaçant la méthode actuelle, empirique et incertaine dans ses résultats.

Ces améliorations pourront notamment bénéficier aux personnes utilisant des bases de données documentaires, dans des applications telles que la gestion de pièces détachées, de documents d'archives, etc. et notamment, selon une caractéristique particulière de l'invention, par une optimisation de l'accès aux références les plus sollicités.

Incidemment, le procédé de l'invention pourra même être utilisé à des fins pédagogiques ou ludiques, par exemple pour amener un utilisateur, confronté à un mot de départ donné, à rechercher les mots additionnels les plus pertinents du point de vue de leur distance sémantique. Le procédé sera utilisé pour retourner à l'utilisateur, pour chacun des mots additionnels soumis, une quantification de leur pertinence par rapport au mot de départ. Le procédé peut être également mis en oeuvre entre plusieurs utilisateurs, par exemple pour confronter leurs aptitudes respectives à la recherche de mots pertinents.

Plus précisément, le procédé de l'invention est un procédé mis en oeuvre par un système informatique du type général correspondant au préambule de la revendication 1, comprenant les étapes spécifiques énoncées à la partie caractérisante de cette revendication 1. Les sous-revendications visent des mises en oeuvre particulières, avantageuses de ce procédé.

On va maintenant décrire plus en détail diverses formes de mise en oeuvre de l'invention, en référence à la figure unique annexée qui est une représentation schématique, par blocs, d'un système informatique susceptible de mettre en oeuvre le procédé de l'invention.

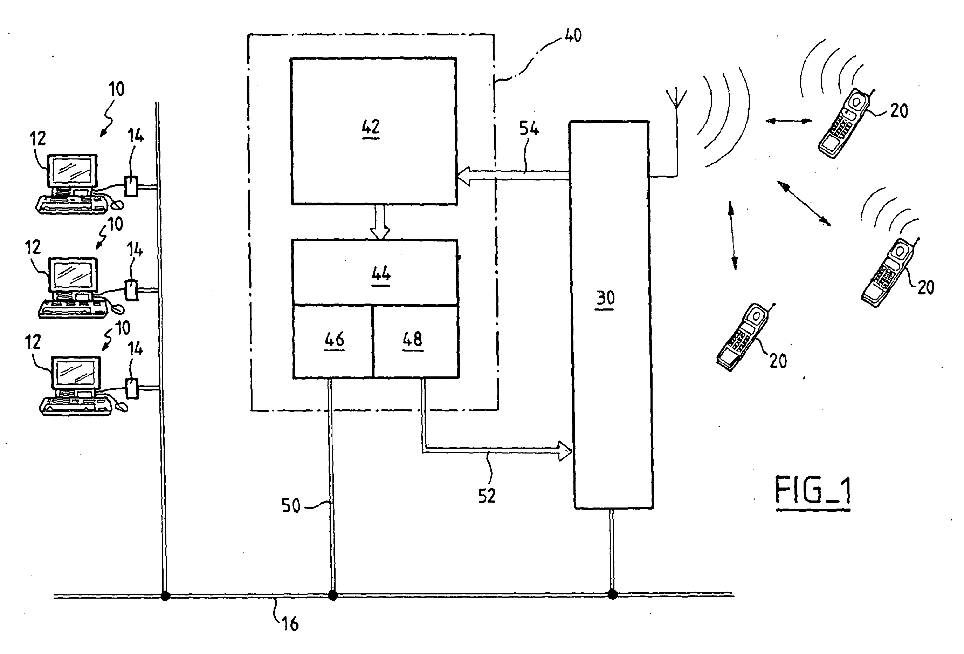

Sur la figure 1, la référence 10 désigne des terminaux informatiques, avec pour chacun un micro-ordinateur 12 relié par une interface 14 à un réseau de télécommunication 16, qui peut être le réseau téléphonique câblé (en mode commuté ou en mode ADSL), un réseau de télédistribution par câble, ou encore une connexion Internet via un serveur commun à plusieurs postes.

Le système peut également comprendre un certain nombre de terminaux téléphoniques cellulaires 20, reliés par un lien de commutation hertzien à une interface 30 du type commutateur de téléphonie mobile. Les terminaux téléphoniques 20 sont dotés de fonctions leur permettant d'échanger des données numériques, notamment textuelles, avec l'interface 30 selon diverses technologies bien connues telles que SMS, WAP, GPRS, UMTS, etc. L'utilisateur saisit au clavier des données qui seront envoyées à l'interface 30, et reçoit de cette dernière des messages qui seront affichés sur l'écran du téléphone.

Le système comporte également un site informatique central 40, typiquement un site Internet. Fonctionnellement, ce site 40 comprend une unité 42 formant moteur de recherche (ou couplée à un moteur de recherche distant), associée à une unité 44 de formatage, avec deux sous-unités 46 et 48 capables de formater les messages en fonction du type de terminal utilisé. Plus précisément, la sous-unité 46 formate les messages afin qu'ils puissent être reçus et affichés par les micro-ordinateurs 12 par exemple sous la forme de pages web affichables par un navigateur, puis les envoie au réseau 16 par la liaison 50. La sous-unité 48 réalise au contraire un formatage adapté à un affichage sur des téléphones mobiles, par exemple sous la forme de pages WAP envoyées à l'interface 30 via la liaison 52. L'interface 30 est également reliée à l'unité 42 via une liaison 54 permettant de transférer à cette dernière les données reçues des terminaux téléphoniques 20 connectés au réseau. Il convient de noter que le contenu des messages formatés par les unités 46 et 48, c'est-à-dire le contenu des messages échangés respectivement avec les terminaux informatiques 10 et téléphoniques 20, est identique ; seule change la mise en page selon que les informations doivent être affichés par l'un ou l'autre type de terminal.

On notera que l'invention peut être mise en oeuvre par d'autres systèmes informatiques que celui que l'on vient de présenter, qui n'a aucun caractère limitatif.

En particulier, le procédé de l'invention peut être implémenté soit par un dispositif dédié, soit intégré à une application préexistante telle qu'un navigateur ou un tableur par un module logiciel ou des macro-instructions exécutant sous forme d'une fonction spécifique les étapes de procédé que l'on décrira plus bas. Les formules et macro-instructions d'un tableur tel qu'*Excel* (marque déposée de Microsoft Inc.) animées par un macro-langage tel que *QuicKeys* (marque déposée de CE Software Inc.) conviennent en particulier à l'exécution des divers calculs et classements exposés plus bas, ainsi qu'à la présentation des résultats et à l'introduction par l'utilisateur des divers paramètres et données.

On va maintenant exposer la manière dont ce système informatique met en oeuvre l'invention.

Pour la simplicité et la clarté de l'exposé, la description qui va suivre sera faite dans l'hypothèse où les différents termes analysés sont des mots choisis par des personnes (utilisateurs), qui entrent ces mots par exemple sur le clavier de leur ordinateur ou de leur téléphone mobile pour transmission au site central, et reçoivent du site central les résultats du traitement, qu'ils exploitent eux-mêmes aux fins qui leur sont propres. Mais l'invention est tout aussi bien applicable à des configurations où les termes sont produits par des algorithmes générateurs de mots, comme dans le cas du WO-A-2004/031916 précité, qui peut délivrer automatiquement des *clusters* de mots conceptuellement apparentés par application d'un modèle probabiliste.

De même, l'invention est applicable à des situations où les résultats délivrés par le procédé de l'invention sont réutilisés dans un traitement automatique, par exemple pour optimiser la recherche de groupes de mots appartenant à un même champ sémantique, pour comparer la pertinence relative de divers groupes de mots, améliorer la convergence d'une recherche, etc.

En d'autres termes, le procédé de l'invention peut être mis en oeuvre, en tout ou partie, avec un "utilisateur" qui n'est pas nécessairement une personne physique, c'est-à-dire que ce procédé peut être interfacé aussi bien en amont (introduction des paramètres) qu'en aval (exploitation des résultats) avec un dispositif distinct assurant un traitement automatique de tout ou partie des données.

De façon générale, le point de départ de l'invention repose sur la constatation de ce qu'un moteur fournit non seulement des renvois vers toutes les pages contenant un mot donné, mais fournit également une autre information, elle-même de très grande valeur, à savoir le nombre de pages où est apparu le mot. Cette information est celle qui apparaît généralement sous l'intitulé "Résultats" renvoyé par les moteurs.

Par exemple {condensateur} donne un résultat de 1 140 000 occurences (par convention, les accolades utilisées dans le texte de la présente description indiquent le terme, ou la série de termes, soumis au moteur). Ce résultat est meilleur que celui de {multiplexeur} (188 000), mais bien inférieur à celui de {resistance} (2 020 000).

Une fonction plus fine des moteurs consiste à chercher des occurrences non plus d'un mot unique, mais de deux, trois ou plusieurs mots réunis en une "phrase" dans la même requête. Par exemple {resistance inductance} renvoie 104 000 occurrences. D'où l'on peut déduire que parmi les 2 020 000 pages qui contenaient {résistance}, seulement environ une sur vingt contenait également le mot {inductance}.

C'est cette propriété des moteurs que le procédé de la présente invention va spécifiquement exploiter.

Essentiellement, l'idée de base du procédé de l'invention consiste, après avoir sélectionné un premier mot (le "mot de départ"), à trouver un autre mot (le "mot additionnel") qui produira le résultat le plus élevé.

Ainsi, le mot de départ {transport} révèle environ 48 000 000 occurrences. Il s'agit dès lors pour l'utilisateur de chercher un mot additionnel qui, combiné avec {transport} produira le nombre d'occurrences le plus élevé possible.

Par exemple, {cocotier} est une mauvaise sélection : le moteur ne trouve qu'environ 2 300 occurrences pour la phrase {transport cocotier}.

Tandis que {avion}, {metro} et surtout {train} fournissent des résultats plus élevés :

| mot(s) | résultat |
| --- | --- |
| transport | 48 000 000 |
| transport avion | 585 000 |
| transport metro | 1 250 000 |
| transport train | 2 800 000 |
| transport voyage | 1 140 000 |
| transport voiture | 611 000 |

On observe que c'est {train} le "meilleur" mot, en ce que son résultat est supérieur à ceux de {metro} et {voiture}.

Mais en cherchant un peu plus dans ce qu'il estime être le champ lexical de {transport} l'utilisateur découvre qu'il est possible de faire mieux que {train} :

| mot(s) | résultat |
|---|---|
| transport bus | 3 400 000 |

Soit pour {bus} un résultat supérieur à celui de {train} C'est donc finalement {bus} qui est le "meilleur" mot - du moins pour ces six tentatives.

On assimilera au cas d'un mot additionnel constitué d'un terme unique celui d'un mot composé se présentant sous forme d'une combinaison de termes, par exemple {"chemin de fer"} dans l'exemple ci-dessus (les guillemets entre des accolades correspondant ici à la syntaxe utilisée pour interroger les moteurs, c'est-à-dire que le moteur cherchera les occurrences de la chaîne indissociable de mots mise entre guillemets).

Avantageusement, le procédé prévoit, avant de fournir le résultat de la phrase contenant le mot additionnel sélectionné, de vérifier le résultat du mot additionnel considéré isolément, et de refuser ce mot additionnel si celui-ci présente, seul, un résultat supérieur au mot de départ. Ceci permet d'éviter que le procédé ne soit biaisé par la sélection comme mot additionnel d'un terme peu significatif tel qu'un article ou un adverbe, etc., qui donneraient (souvent) un résultat élevé.

Le déroulement du procédé peut être notamment exprimé par l'organigramme simplifié en métalangage ci-dessous, qui n'est donné qu'à titre illustratif (MD désigne le mot de départ, MA le mot additionnel) :

```
input (MD)
get result (MD)
compteur = 0
while not STOP

    input (MA)
    test result (MA) < result (MD)
    get result (MD & MA)
    if result (MA) > Highest then Highest = result (MA)
    compteur = compteur + 1
    if compteur > 10 then END

wend
```

Le résultat pourra être présenté soit en nombre d'occurrences de la combinaison {(mot de départ) (mot additionnel)}, soit sous forme d'un ratio entre ce dernier résultat et le résultat du mot de départ pris isolément.

Ainsi, dans l'exemple suivant correspondant à des requêtes dans le domaine des composants-clef de l'engineering électronique (le ratio précité étant multiplié par 100 pour en améliorer la lisibilité) :

| mot(s) | résultat | ratio*100 |
|---|---|---|
| engineering | 1 100 000 | 100 |
| engineering memoire | 595 000 | 54,0909 |
| engineering registre | 159 000 | 14,4545 |
| engineering relais | 150 000 | 13,6364 |
| engineering compteur | 71 100 | 6,4636 |
| engineering buffer | 54 700 | 4,9727 |
| engineering integrateur | 54 300 | 4,9364 |
| engineering decodeur | 44 200 | 4,0182 |
| engineering blindage | 41 400 | 3,7636 |
| engineering multiplexeur | 15 500 | 1,4091 |
| *engineering schottky* | *936* | *0, 0851* |

Pour un ratio inférieur à 1 ‰ (résultat inférieur à 0,1), le mot additionnel est considéré comme "hors sujet", non pertinent, qui ne sera pas considéré comme appartenant au champ sémantique du mot de départ.

Cette propriété peut être en particulier utilisée dans une variante visant à rechercher les mots dont la distance sémantique relative est la plus élevée, par exemple pour isoler certains mots dont on veut établir avec certitude - et de façon automatisée - que leur probabilité est infime d'appartenir au même champs sémantique que le mot de départ. En d'autres termes, le procédé n'est plus basé, dans ce cas, sur le "sens" des mots, mais au contraire sur le "contresens".

Dans une autre variante encore, au lieu d'initier le procédé avec un mot de départ constitué d'un terme isolé (par exemple {engineering}), on peut prendre comme mot de départ une combinaison de mots (par exemple {engineering mémoire}).

Il est ainsi possible, après une première exécution du procédé commencé avec un mot de départ isolé, de retenir l'une des combinaisons {mot-de-départ, mot-additionnel} qui a été soumise au moteur de recherche, et de réexécuter l'algorithme avec cette combinaison de mots particulière comme nouveau mot de départ.

On pourra éventuellement appliquer une pondération pour tenir compte du nombre de tentatives, en appliquant une minoration d'autant plus forte que le nombre de tentatives est élevé. Inversement, une bonification pourra être appliquée si le "meilleur" mot est trouvé à la première tentative.

Dans une forme particulière de mise en oeuvre, pour un mot de départ donné (par exemple {transport}) le site central sélectionne une pluralité de mots (par exemple {bus}, {train} et {metro}) et présente ces mots à l'utilisateur, sans indication de résultat et dans un ordre quelconque, en lui demandant de choisir parmi ces mots celui qui, pense-t-il, donne le résultat le plus élevé - ou, en variante, qui donne les deux meilleurs, ou encore les trois meilleurs, c'est-à-dire que dans ce dernier cas le procédé revient à classer les mots par résultat décroissant. On peut également demander à l'utilisateur de sélectionner ou classer trois, quatre ou cinq mots parmi dix ou vingt qui lui sont proposés.

Les réponses peuvent être pondérées par une majoration d'autant plus importante que la sélection et/ou le classement sont pertinents, et inversement.

Selon un autre aspect, l'invention peut être appliquée à l'analyse non plus d'une succession de mots considérés isolément, mais d'un ensemble de mots considérés collectivement. Il est en effet difficile d'évaluer intuitivement, *a fortiori* de quantifier, la pertinence globale d'un groupe de mots, et de distinguer un groupe de mots proches de sens, d'un groupe de mots loin du sens (le "sens" étant défini par le mot de départ)

Il s'agit alors d'estimer, par rapport à un mot de départ donné, la pertinence relative, globale, de deux (ou plus) listes de $n$ mots (par exemple $n$ = 10 mots), c'est-à-dire de déterminer celle qui est la plus riche sur le plan sémantique.

Pour ce faire, un "indice d'apparentement" est calculé pour chaque liste, qui est un indice représentatif de sa pertinence propre par rapport au mot de départ. Cet indice d'apparentement permettra ensuite de comparer entre elles diverses listes et, d'autre part, d'éliminer ou de retenir une liste donnée en comparant l'indice à un seuil donné, seuil qui pourra être lui-même paramétrable en fonction du degré d'exigence requis pour la discrimination.

On va donner un exemple de mise en oeuvre de cette technique, en référence au Tableau 1 ci-après.

## TABLEAU 1

| Mot de départ | Mot additionnel | % relatif | ◄ ▯ ▶<br>Seuil = 2,5 | Résultats |
|---|---|---|---|---|
| **electronique** | | 100,0000 | | 9 210 000 |
| electronique | memoire | **18,6754** | | 1 720 000 |
| electronique | relais | 13,0293 | | 1 200 000 |
| electronique | registre | 12,5950 | | 1 160 000 |
| electronique | compteur | 11,8350 | | 1 090 000 |
| electronique | decodeur | 7,2096 | | 664 000 |
| electronique | integrateur | 4,1151 | | 379 000 |
| electronique | blindage | 2,6602 | | 245 000 |
| electronique | buffer | 1,6830 | | 155 000 |
| electronique | multiplexeur | 0,9522 | | 87 700 |
| electronique | zener | 0,5364 | | 49 400 |

Moyenne des 10 mots :  **7,329**

Indice d'apparentement (Max/Moy) :  **2,55**  *[trop élevé -> liste non pertinente]*

| Mot de départ | Mot additionnel | % relatif | | Résultats |
|---|---|---|---|---|
| **electronique** | | 100,0000 | | 9 210 000 |
| electronique | comparateur | **19,0011** | | 1 750 000 |
| electronique | porte | 17,5896 | | 1 620 000 |
| electronique | resistance | 13,8979 | | 1 280 000 |
| electronique | ampli | 13,4636 | | 1 240 000 |
| electronique | self | 11,4007 | | 1 050 000 |
| electronique | diode | 7,4593 | | 687 000 |
| electronique | décodeur | 7,2096 | | 664 000 |
| electronique | radiateur | 5,5809 | | 514 000 |
| electronique | transformateur | 5,1574 | | 475 000 |
| electronique | condensateur | 4,8317 | | 445 000 |

Moyenne des 10 mots :  **10,559**

Indice d'apparentement (Max/Moy)  **1,80**    **LISTE PERTINENTE**

Dans cet exemple, le mot de départ est *électronique.* À partir de ce mot de départ le moteur de recherche donne un résultat de 9 200 000 occurrences.

La première étape consiste à établir deux listes de mots additionnels, par exemple deux listes de dix mots.

Dans l'exemple du Tableau 1, la première liste comprend les mots : *mémoire, relais, registre, ... multiplexeur, Zener.* De même, la deuxième liste comprend les mots *comparateur, porte, résistance ... transformateur, condensateur.*

L'étape suivante consiste à classer les différents mots additionnels de chaque liste, par résultat décroissant. Les deux listes du Tableau 1 sont présentées de cette manière, le résultat étant exprimé en pourcentage relatif (18,67 %, 13,02 %, ...) par rapport au résultat du mot de départ (100 %).

L'étape suivante consiste à calculer la moyenne des dix mots (ou des dix meilleurs mots, si un plus grand nombre de mots ont été testés), soit 7,329 % pour la première liste et 10,559 % pour la deuxième liste.

Cette moyenne pourrait être retenue comme indice d'apparentement, pour évaluer la pertinence de la première liste (moyenne : 10,559) par rapport à la deuxième liste (moyenne : 7,329).

L'expérience montre toutefois que, en pratique, ce critère n'optimise pas toujours l'évaluation de la pertinence relative pour cette liste.

L'invention propose d'améliorer encore la discrimination en appliquant une pondération.

Cette pondération peut être notamment fonction du résultat le plus élevé obtenu pour les différents mots de la liste, c'est-à-dire en fonction du résultat du "meilleur" mot additionnel.

L'indice d'apparentement peut être à cet effet défini comme étant le quotient du résultat obtenu avec le meilleur mot additionnel de la liste (MAX) par la moyenne de tous les mots de cette même liste (MOY).

Dans l'exemple des deux listes du Tableau 1, pour la première liste l'indice d'apparentement ainsi calculé vaut : 18,6754 ÷ 7,329 = 2,55, tandis que pour la deuxième liste il vaut : 19,0011 ÷ 10,559 = 1,80.

L'indice ainsi calculé est un nombre supérieur à l'unité, et la pertinence de la liste sera d'autant plus élevée que la valeur de cet indice sera faible (proche de l'unité), et *vice versa.* On notera que, si l'indice était calculé de la manière inverse, c'est-à-dire MOY/MAX, sa valeur serait comprise entre 0 et 1, une pertinence élevée étant reflétée par une valeur élevée, proche de l'unité.

Dans tous les cas, une valeur proche de l'unité indique une pertinence forte, révélatrice de mots présentant tous des scores élevés, proches du score maximal.

Avantageusement, l'indice d'apparentement est comparé à un seuil donné, fixé en fonction de la sélectivité recherchée : un seuil proche de l'unité correspondra à une exigence élevée sur le critère de pertinence, tandis qu'un seuil plus élevé permettra de considérer comme pertinentes un plus grand nombre de listes.

Avec l'exemple du Tableau 1, on voit ainsi que si l'on fixe le seuil à 2,5, la première liste sera considérée comme insuffisamment pertinente (son indice d'apparentement vaut 2,55), tandis que la deuxième liste sera nettement plus pertinente (indice d'apparentement : 1,80).

Le seuil est très avantageusement paramétrable par l'utilisateur, par exemple via une interface graphique comprenant des flèches ou un curseur de potentiomètre linéaire.

Le fait que le critère de pertinence soit ou non vérifié, c'est-à-dire la position de l'indice d'apparentement de chaque liste par rapport au seuil, peut être affiché sur cette même interface de façon immédiatement perceptible sous forme d'un indicateur booléen, par exemple un changement de couleur ou l'affichage d'un message "PERTINENT" dans une cellule (comme illustré sur le Tableau 1).

Si l'on prend l'exemple du Tableau 1, le réglage du seuil à 2,5 provoque l'affichage du message "PERTINENT" pour la seconde liste, et pour cette liste seulement, car l'indice d'apparentement de la première liste (2,55) est trop élevé par rapport au seuil (2,5) de sorte que cette première liste est considérée comme non pertinente.

Si l'utilisateur modifie le seuil, par exemple en l'augmentant de 2,5 à 2,6, alors il verra s'afficher le message "PERTINENT" pour la première liste également. Inversement s'il abaisse le seuil, par exemple de 2,5 à 1,7, le message "PERTINENT" disparaîtra pour les deux listes.

Un tel affichage interactif offre à l'utilisateur la possibilité de réagir directement grâce à la perception immédiate du résultat atteint, variable selon le réglage du seuil, ce qui permet une mise en oeuvre particulièrement efficace du procédé de l'invention.

La pondération de l'indice d'apparentement peut également tenir compte, dans une variante plus élaborée, de l'écart entre le résultat du mot de départ et la moyenne correspondante des différents mots de la liste.

Une telle pondération permet notamment de prendre en compte le fait que, pour un mot de départ donnant un résultat initial faible (dans l'absolu), il sera aisé de trouver des mots additionnels donnant des résultats proches (en valeur relative) de ce résultat initial, conduisant à un indice relativement favorable, dû au faible écart-type des mots additionnels. En revanche, pour un mot de départ donnant un résultat initial élevé, il sera difficile de trouver des mots additionnels donnant des résultats proches de ce résultat initial, conduisant donc à un indice relativement médiocre. La prise en compte de l'écart entre, d'une part, le résultat du mot de départ et, d'autre part, la moyenne des résultats des mots additionnels reflètera cette difficulté accrue et permettra de donner une valeur d'indice pondéré plus significative.

Il est également possible de prendre en compte le nombre de mots de la liste, considéré comme une variable et non plus comme un paramètre figé au départ. Dans ce cas, l'indice d'apparentement sera pondéré de manière à apparaître d'autant meilleur que le nombre de mots de la liste est élevé : il est en effet plus facile de trouver une liste pertinente courte qu'une liste longue, car la probabilité augmente alors de rencontrer des termes peu pertinents, susceptibles de faire chuter la moyenne. Cette difficulté accrue est prise en compte si l'indice est pondéré par le nombre de mots additionnels de la liste.

Un indice de ce type est par exemple calculé à partir de la formule :

$$INDICE = [(MAX/MOY)] * N,$$

MAX étant le résultat obtenu avec le meilleur mot additionnel,
MOY étant la moyenne des résultats de tous les mots de la liste,
N étant le nombre des mots de la liste.

De façon générale, il existe de nombreuses manières d'opérer les diverses pondérations que l'on vient d'exposer.

À titre d'exemple non limitatif, on peut calculer un indice d'apparentement à partir de la formule généralisée suivante :

$$INDICE = [1/(MDD - MAX)] * [1/(MDD - MOY)] * N,$$

MDD étant le résultat du mot de départ,
MAX étant le résultat obtenu avec le meilleur mot additionnel,
MOY étant la moyenne des résultats de tous les mots de la liste,
N étant le nombre des mots de la liste.

Dans cet indice :

- le facteur [1 /(MDD - MAX)] est représentatif de la qualité des divers mots additionnels trouvés ; il reflète la difficulté qu'il y a d'établir une liste pertinente lorsque le "meilleur" mot additionnel présente un résultat élevé ;
- le facteur [1 /(MDD - MOY)] est représentatif de la constance des résultats des divers mots additionnels ; il reflète la faible dispersion de ces mots autour de la moyenne ;
- le facteur N, correspondant à la longueur de la liste, reflète le caractère plus ou moins prolixe du processus de génération des mots additionnels.

Cet indice pondéré permettra de classer entre elles plusieurs listes de mots, de la plus significative à la moins significative, c'est-à-dire de la plus riche à la moins riche sur le plan sémantique.

De très nombreuses variantes de calcul de cet indice peuvent être bien entendu envisagées, par exemple en partant de la médiane au lieu de la moyenne, en introduisant des non-linéarités par des élévations à une puissance entière ou fractionnaire de certains termes, par l'application de seuils ou de plafonnements, etc., de manière à optimiser la pertinence de l'indice en fonction des résultats des expérimentations pratiques.

**Revendications**

1. Un procédé d'analyse et de traitement des requêtes appliquées à un moteur de recherche,
   ce procédé étant mis en oeuvre par un système informatique comprenant :

   - ledit moteur de recherche,
   - des moyens pour produire des mots de vocabulaire,
   - des moyens pour soumettre au moteur de recherche des requêtes contenant chacune un mot, ou une pluralité de mots associés groupés en une phrase, et
   - des moyens pour recevoir en réponse à chacune de ces requêtes un résultat numérique représentatif des occurrences du mot, ou de la phrase, dans un ensemble de pages web indexées par le moteur de recherche,

   ce procédé étant **caractérisé en ce qu'**il comprend la séquence d'étapes successives de :

   a) détermination d'un mot de départ et soumission d'une requête contenant ce mot de départ ;
   b) réception d'un résultat initial correspondant à cette requête contenant le mot de départ ;
   c) génération d'un mot additionnel et soumission d'une requête contenant une phrase incluant le mot de départ et le mot additionnel généré, distingués par un séparateur ;
   d) réception du résultat, inférieur au résultat initial, correspondant à la requête formulée à l'étape c) ;

e) réitération N-1 fois des étapes c) et d) avec à chaque fois un mot additionnel différent, donnant ainsi N résultats respectifs correspondant aux N mots additionnels successivement générés ; et
f) classement des N résultats ainsi obtenus.

2. Le procédé de la revendication 1, comprenant en outre, après l'étape f), une étape de :

g) attribution d'un indice d'apparentement selon une règle fonction desdits N résultats,
cet indice d'apparentement étant un indice global attribué à la famille des N mots additionnels générés,
cet indice d'apparentement étant également un indice relatif, attribué en considération du mot de départ.

3. Le procédé de la revendication 2, dans lequel ledit indice d'apparentement est un indice fonction de la moyenne (MOY) des résultats des mots additionnels.

4. Le procédé de la revendication 2, dans lequel ledit indice d'apparentement est un indice pondéré par la valeur (MAX) du résultat correspondant au mot additionnel donnant le résultat le plus élevé.

5. Le procédé de la revendication 2, dans lequel ledit indice d'apparentement est un indice pondéré par la valeur (MDD) du résultat correspondant au mot de départ.

6. Le procédé de la revendication 2, dans lequel ledit indice d'apparentement est un indice pondéré par le nombre N de mots additionnels.

7. Le procédé des revendications 3 et 4 prises en combinaison, dans lequel ledit indice d'apparentement est un indice fonction du quotient (MAX/MOY) du résultat (MAX) correspondant au mot additionnel donnant le résultat le plus élevé par la moyenne (MOY) des résultats des mots additionnels.

8. Le procédé des revendications 3 et 5 prises en combinaison, dans lequel ledit indice d'apparentement est un indice fonction de la différence (MDD - MOY) entre la valeur (MDD) du résultat correspondant au mot de départ et la moyenne (MOY) des résultats des mots additionnels.

9. Le procédé des revendications 4 et 5 prises en combinaison, dans lequel ledit indice d'apparentement est un indice fonction de la différence (MDD - MOY) entre la valeur (MDD) du résultat correspondant au mot de départ et la valeur (MAX) du résultat correspondant au mot additionnel donnant le résultat le plus élevé.

10. Le procédé des revendications 3 à 6 prises en combinaison, dans lequel ledit indice d'apparentement est un indice fonction de l'expression :

$$[1/(MDD - MAX)] * [1/(MDD - MOY)] * N,$$

MDD étant le résultat du mot de départ,
MAX étant le résultat obtenu avec le meilleur mot additionnel,
MOY étant la moyenne des résultats de tous les mots de la liste,
N étant le nombre des mots de la liste.

11. Le procédé de la revendication 2, comprenant en outre, après l'étape g), une étape de :

h) comparaison de l'indice d'apparentement à un seuil donné, et production d'un indicateur booléen dont la valeur reflète le franchissement, ou non, de ce seuil.

12. Le procédé de la revendication 1, dans lequel le système informatique comprend en outre :

- au moins un terminal (10, 20), apte à présenter des données à un utilisateur et à permettre à cet utilisateur de fournir des données au système, ce terminal comprenant lesdits moyens pour soumettre des requêtes au moteur de recherche et pour recevoir en réponse un résultat numérique, et
- un site central (40) couplé au terminal ou à chacun des terminaux, et au moteur de recherche.

**13.** Le procédé de la revendication 12, dans lequel l'étape a) de détermination du mot de départ est une étape de sélection d'un mot par un utilisateur dans un ensemble de mots prédéfini.

**14.** Le procédé de la revendication 12, dans lequel l'étape a) de détermination du mot de départ est une étape de sélection d'un mot par le site central parmi un ensemble de mots prédéfini.

**15.** Le procédé de la revendication 12, dans lequel le système est mis en oeuvre par une pluralité d'utilisateurs et lesdits mots additionnels générés à l'étape c) sont des mots fournis par les utilisateurs au système, chaque utilisateur fournissant au moins un mot additionnel respectif.

**16.** Le procédé de la revendication 12, dans lequel, le mot de départ et les mots additionnels étant générés par le système, le procédé comprend en outre, après l'étape f), les étapes suivantes :

i) par le site central, présentation à l'utilisateur des N mots additionnels, dans un ordre quelconque ;
j) par l'utilisateur, établissement d'un classement estimé de M mots choisis parmi les N mots additionnels présentés, avec $M \leq N$, et communication de ce classement estimé au site central ; et
k) attribution d'un score de pertinence, fonction de la proximité entre le classement estimé communiqué par l'utilisateur, et le classement réel déterminé à l'étape f).

**17.** Le procédé de la revendication 12, dans lequel ledit terminal est un téléphone cellulaire (20), et ledit site central (40) est un site distant relié par des moyens de télécommunication (30, 52, 54) à une pluralité desdits terminaux.

**18.** Le procédé de la revendication 12, dans lequel ledit terminal est un ordinateur personnel (10), et ledit site central (40) est un site distant relié par des moyens de télécommunication (14, 16, 50) à une pluralité desdits terminaux.

FIG_1

EP 1 921 550 A1

**Office européen
des brevets**

## RAPPORT DE RECHERCHE EUROPEENNE

Numéro de la demande

EP 07 29 0334

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 530 993 A (XEROX CORP [US] XEROX CORP [SE]) 10 mars 1993 (1993-03-10) * abrégé * * colonne 14, ligne 1 - colonne 15, ligne 20; figures 4-7 * ----- | 1-18 | INV. G06F17/30 |
| X | WO 00/54185 A (PROCTER & GAMBLE [US]) 14 septembre 2000 (2000-09-14) * abrégé * * page 3, ligne 28 - page 6, ligne 17 * ----- | 1 | |
| A | US 6 314 419 B1 (FAISAL MOHAMMAD [US]) 6 novembre 2001 (2001-11-06) * le document en entier * ----- | 1-18 | |
| A | US 2002/091661 A1 (ANICK PETER [US] ET AL) 11 juillet 2002 (2002-07-11) * alinéas [0008] - [0011] * * alinéas [0028], [0029] * * alinéas [0052], [0053] * ----- | 1-18 | |
| A | COOPER J W ET AL: "OBIWAN-a visual interface for prompted query refinement" SYSTEM SCIENCES, 1998., PROCEEDINGS OF THE THIRTY-FIRST HAWAII INTERNATIONAL CONFERENCE ON KOHALA COAST, HI, USA 6-9 JAN. 1998, LOS ALAMITOS, CA, USA,IEEE COMPUT. SOC, US, 6 janvier 1998 (1998-01-06), pages 277-285, XP010262890 ISBN: 0-8186-8255-8 * partie 1. Introduction * * partie "Unamed Relations" page 278 * ----- -/-- | 1 | **DOMAINES TECHNIQUES RECHERCHES (IPC)** G06F |

Le présent rapport a été établi pour toutes les revendications

| Lieu de la recherche | Date d'achèvement de la recherche | Examinateur |
|---|---|---|
| Berlin | 21 février 2008 | Lechenne, Laurence |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

........................................................................
& : membre de la même famille, document correspondant

EPO FORM 1503 03.82 (P04C02)

**EP 1 921 550 A1**

Office européen
des brevets

**RAPPORT DE RECHERCHE EUROPEENNE**

Numéro de la demande

EP 07 29 0334

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ANICK P G ET AL ASSOCIATION FOR COMPUTING MACHINERY: "THE PARAPHRASE SEARCH ASSISTANT: TERMINOLOGICAL FEEDBACK FOR ITERATIVE INFORMATION SEEKING" PROCEEDINGS OF SIGIR'99. 22ND. INTERNATIONAL CONFERENCE ON RESEARCH AND DEVELOPMENT IN INFORMATION RETRIEVAL. BERKELEY, CA, AUG. ; 1999, ANNUAL INTERNATIONAL ACM-SIGIR CONFERENCE ON RESEARCH AND DEVELOPMENT IN INFORMATION RETRIEVAL, NEW YORK, NY : AC, août 1999 (1999-08), pages 153-159, XP000970713 ISBN: 1-58113-096-1 * paragraphe 2.3, page 155 * ----- | 1 | |
| A | CUI J ET AL: "CALCULATING WORD SIMILARITY BASED ON COMMON ATTRIBUTES, TOTAL SEMANTIC DISTANCE AND CONCEPT FREQUENCY" SYMBIOSIS OF HUMAN AND ARTIFACT, 9 juillet 1995 (1995-07-09), pages 729-734, XP008040223 * le document en entier * ----- | 1-18 | |
| A | EP 0 889 419 A (MATSUSHITA ELECTRIC IND CO LTD [JP]) 7 janvier 1999 (1999-01-07) * abrégé * ----- | 1-18 | |
| A | EP 1 587 011 A (MICROSOFT CORP [US]) 19 octobre 2005 (2005-10-19) * le document en entier * ----- | 1-18 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Berlin | 21 février 2008 | Lechenne, Laurence |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 07 29 0334

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-02-2008

| Document brevet cité au rapport de recherche | | Date de publication | Membre(s) de la famille de brevet(s) | | Date de publication |
|---|---|---|---|---|---|
| EP 0530993 | A | 10-03-1993 | DE | 69229204 D1 | 24-06-1999 |
| | | | DE | 69229204 T2 | 04-11-1999 |
| | | | JP | 3027052 B2 | 27-03-2000 |
| | | | JP | 5189487 A | 30-07-1993 |
| | | | US | 5278980 A | 11-01-1994 |
| WO 0054185 | A | 14-09-2000 | AU | 4007000 A | 28-09-2000 |
| | | | EP | 1212697 A1 | 12-06-2002 |
| US 6314419 | B1 | 06-11-2001 | AUCUN | | |
| US 2002091661 | A1 | 11-07-2002 | AUCUN | | |
| EP 0889419 | A | 07-01-1999 | CN | 1206158 A | 27-01-1999 |
| | | | DE | 69833238 T2 | 28-09-2006 |
| | | | JP | 3607462 B2 | 05-01-2005 |
| | | | JP | 11025108 A | 29-01-1999 |
| | | | US | 6212517 B1 | 03-04-2001 |
| EP 1587011 | A | 19-10-2005 | AU | 2005201682 A1 | 27-10-2005 |
| | | | BR | 0501320 A | 06-12-2005 |
| | | | CA | 2504106 A1 | 15-10-2005 |
| | | | CN | 1684072 A | 19-10-2005 |
| | | | JP | 2005302042 A | 27-10-2005 |
| | | | KR | 20060045770 A | 17-05-2006 |
| | | | MX | PA05004099 A | 19-10-2005 |
| | | | US | 2005234879 A1 | 20-10-2005 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004031916 A, Google Inc.